# EUROPÄISCHE PATENTANMELDUNG

(11) **EP 3 264 038 A1**
(43) Veröffentlichungstag der Anmeldung: **03.01.2018**
(21) Anmeldenummer: 16177221.5
(22) Anmeldetag: 30.06.2016
(51) Int. Cl.: G01C 15/00

(54) **VERFAHREN ZUM VERGLEICHEN EINES AUF EINEN LASEREMPFÄNGER AUFTREFFENDEN EMPFANGSSTRAHLS MIT EINEM ROTIERENDEN LASERSTRAHL**

(71) Anmelder: HILTI Aktiengesellschaft, 9494 Schaan (LI)
(72) Erfinder: Lukic, Sasha, 9470 Buchs (CH); Halasi, Andras, 6800 Feldkirch (AT); Kearney, Ian, 6800 Feldkirch (AT); Calkic, Ermin, 9470 Buchs (CH)
(74) Vertreter: Hilti Aktiengesellschaft Corporate Intellectual Property

(57) **Zusammenfassung**

Verfahren zum Vergleichen eines auf einen Laserempfänger (12) in Längsanordnung auftreffenden Empfangsstrahls (24) mit einem rotierenden Laserstrahl (22), der von einem Rotationslaser (11) in Horizontallage um eine Rotationsachse (21) bewegt wird, wobei der Laserempfänger (12) eine Auswerteeinheit und mindestens ein Detektionsfeld (25) mit einer Längsrichtung (28) und einer Querrichtung (29) umfasst. Der Rotationslaser (11) wird auf einem entlang einer Achse (15) verstellbaren Stativ (14) angeordnet und die horizontale Laserebene, die der rotierende Laserstrahl (22) erzeugt, wird von dem Stativ (14) in einer Höhenrichtung (16) entlang der Achse (15) bewegt. In der Längsrichtung (28) des Detektionsfeldes (25) wird von der Auswerteeinheit eine Verstellrichtung des Empfangsstrahls (24) relativ zum Laserempfänger (12) ermittelt und die Verstellrichtung des Empfangsstrahls (24) wird von der Auswerteeinheit mit der Höhenrichtung (16) des Stativs (14) verglichen.

## Beschreibung

### Technisches Gebiet

Die vorliegende Erfindung betrifft ein Verfahren zum Vergleichen eines auf einen Laserempfänger auftreffenden Empfangsstrahls mit einem rotierenden Laserstrahl gemäß dem Oberbegriff des Anspruchs 1 sowie eine Vorrichtung zur Durchführung eines solchen Verfahrens gemäß dem Oberbegriff des Anspruchs 13.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden.

Bei Rotationslasern, die ohne Schutzmaßnahmen, wie Schutzbrillen, eingesetzt werden dürfen, ist die maximale Laserleistung begrenzt. Die erlaubten maximalen Laserleistungen führen bei Nivellier- und Markierungsarbeiten im Außenbereich häufig zu nicht oder schlecht sichtbaren Laserstrahlen. Um die Sichtbarkeit der Laserstrahlen zu verbessern, werden Zieltafeln oder Laserempfänger in den Laserstrahl gehalten. Laserempfänger werden als Handgerät von einem Bediener direkt in den Laserstrahl gehalten oder an einer Teleskop- oder Nivellierstange befestigt. Laserempfänger können mit einer Höhenmessfunktion ausgestattet sein, die die Auftreffposition eines Empfangsstrahls auf einem Detektionsfeld des Laserempfängers ermittelt und den Abstand des Empfangsstrahls zu einer Nullposition des Detektionsfeldes als Höhenposition darstellt. Bekannte Laserempfänger mit Höhenmessfunktion umfassen eine Auswerteeinheit und mindestens ein Detektionsfeld mit einer Längsrichtung und einer Querrichtung, wobei der Laserempfänger in Abhängigkeit von der Gerätelage des Rotationslasers in einer Längsanordnung oder einer Queranordnung ausgerichtet wird. Bei einem Rotationslaser in Horizontallage wird die Längsrichtung des Detektionsfeldes parallel zur Gravitationsrichtung ausgerichtet (Längsanordnung) und bei einem Rotationslaser in Vertikallage wird die Querrichtung des Detektionsfeldes parallel zur Gravitationsrichtung ausgerichtet (Queranordnung).

Bei Nivellier- und Markierungsarbeiten kann es durch Fremdstrahlen oder Reflektionen des rotierenden Laserstrahls zu Fehlmessungen kommen. Bekannt sind verschiedene Verfahren zum Vergleichen eines auf den Laserempfänger auftreffenden Empfangsstrahls mit dem rotierenden Laserstrahl. Um das Risiko von Fehlmessungen mit einem Laserempfänger zu reduzieren, ist es bekannt, den rotierenden Laserstrahl des Rotationslasers mit einem Modulationssignal zu modulieren. Der auf den Laserempfänger auftreffende Empfangsstrahl wird von der Auswerteeinheit des Laserempfängers ausgewertet und als rotierender Laserstrahl eingestuft, wenn der Empfangsstrahl mit dem Modulationssignal moduliert wurde. Nachteilig ist, dass eine Reflektion des rotierenden Laserstrahls an einer Reflexionsfläche von der Auswerteeinheit nicht erkannt wird. Der reflektierte Laserstrahl wurde mit dem Modulationssignal moduliert und wird von der Auswerteeinheit des Laserempfängers als rotierender Laserstrahl eingestuft.

US 7,119,316 B2 offenbart ein weiteres bekanntes Verfahren zum Vergleichen eines auf einen Laserempfänger auftreffenden Empfangsstrahls mit einem rotierenden Laserstrahl, der von einem Rotationslaser ausgesandt wird. Der Laserempfänger umfasst ein Detektionsfeld, das in einer Längsrichtung aus mehreren Photodetektor-Arrays zusammengesetzt ist, wobei die Photodetektor-Arrays in Längsrichtung jeweils mehrere Photodetektoren umfassen. Beim Auftreffen eines Empfangsstrahls auf das Detektionsfeld werden von der Auswerteeinheit für jedes Photodetektor-Array erste und zweite Referenzsignale bestimmt, wobei das erste und zweite Referenzsignal die Amplituden der äußeren Photodetektoren des Photodetektor-Arrays darstellen, die vom Empfangsstrahl erfasst werden. Die Referenzsignale werden von der Auswerteeinheit durch Summenbildung, Differenzbildung und Quotientenbildung weiterverarbeitet, bis sich ein Quotient für die Bewertung ergibt. Dieser Quotient wird mit einem voreingestellten Grenzwert verglichen. Ist der Quotient kleiner als der Grenzwert, wird der Empfangsstrahl als Laserstrahl ("moving thin beam of laser light") eingestuft. Ist der Quotient grösser als der Grenzwert, wird der Empfangsstrahl als Fremdstrahl ("omni-directional pulse of light") eingestuft.

Aus US 7,224,473 B2 ist ein weiteres Verfahren zum Vergleichen eines auf einen Laserempfänger auftreffenden Empfangsstrahls mit einem rotierenden Laserstrahl bekannt. Der Laserempfänger umfasst ein Detektionsfeld, das in einer Längsrichtung aus mehreren Photodetektoren zusammengesetzt ist, und einen zusätzlichen Photodetektor. Beim Auftreffen eines Empfangsstrahls auf den Laserempfänger bestimmt die Auswerteeinheit ein erstes, zweites und drittes Referenzsignal, wobei das erste Referenzsignal den elektrischen Output eines ersten äußeren Photodetektors, der vom Empfangsstrahl erfasst wird, darstellt, das zweite Referenzsignal den elektrischen Output eines zweiten äußeren Photodetektors, der vom Empfangsstrahl erfasst wird, darstellt und das dritte Referenzsignal den elektrischen Output des zusätzlichen Photodetektors darstellt. Anhand des dritten Referenzsignals erfolgt eine Bewertung des Empfangsstrahls. Ist die Amplitude des dritten Referenzsignals hinreichend klein ("sufficiently low"), wird der Empfangsstrahl als Laserstrahl des Rotationslasers eingestuft. Ist die Amplitude des dritten Referenzsignals hingegen hinreichend groß ("sufficiently high"), wird der Empfangsstrahl als Fremdstrahl ("omni-directional pulse of light") eingestuft.

Die aus US 7,119,316 B2 und US 7,224,473 B2 bekannten Verfahren zum Verfahren zum Vergleichen eines auf einen Laserempfänger auftreffenden Empfangsstrahls mit einem rotierenden Laserstrahl eines Rotationslasers weisen den Nachteil auf, dass eine Reflektion des rotierenden Laserstrahls an einer Reflexionsfläche von der Auswerteeinheit des Laserempfängers nicht erkannt wird und fälschlicherweise als rotierender Laserstrahl eingestuft wird. Durch die Reflektion des rotierenden Laserstrahls an der Reflexionsfläche verändern sich die Amplituden der Referenzsignale nicht oder nur unwesentlich und haben keinen Einfluss auf Kriterien für die Bewertung des Empfangsstrahls.

### Darstellung der Erfindung

Die Aufgabe der vorliegenden Erfindung besteht in der Entwicklung eines Verfahrens zum Vergleichen eines auf einen Laserempfänger auftreffenden Empfangsstrahls mit einem rotierenden Laserstrahl, bei dem das Risiko von Fehlmessungen durch eine Reflektion des rotierenden Laserstrahls an einer Reflexionsfläche reduziert ist. Außerdem soll das Verfahren für eine weitgehend automatische Ausführung geeignet sein.

Diese Aufgabe wird bei dem eingangs genannten Verfahren zum Vergleichen eines auf einen Laserempfänger auftreffenden Empfangsstrahls mit einem rotierenden Laserstrahl erfindungsgemäß durch die Merkmale des unabhängigen Anspruchs 1 und bei der eingangs genannten Vorrichtung zur Durchführung eines solchen Verfahrens erfindungsgemäß durch die Merkmale des unabhängigen Anspruchs 13 gelöst. Vorteilhafte Weiterbildungen sind in den abhängigen Ansprüchen angegeben.

Das Verfahren zum Vergleichen eines auf einen Laserempfänger auftreffenden Empfangsstrahls mit einem rotierenden Laserstrahl, der von einem Rotationslaser um eine Rotationsachse bewegt wird, wobei der Laserempfänger eine Auswerteeinheit und mindestens ein Detektionsfeld mit einer Längsrichtung und einer Querrichtung umfasst, weist erfindungsgemäß die Schritte auf:
▪ der Rotationslaser wird auf einem entlang einer Achse verstellbaren Stativ angeordnet, wobei die Rotationsachse des Rotationslasers und die Achse des Stativs im Wesentlichen parallel zu einer Gravitationsrichtung des Gravitationsfeldes ausgerichtet werden,
▪ der Laserempfänger wird in einer Längsanordnung ausgerichtet, wobei in der Längsanordnung die Längsrichtung des mindestens einen Detektionsfeldes in der Längsanordnung im Wesentlichen parallel und die Querrichtung des mindestens einen Detektionsfeldes im Wesentlichen senkrecht zur Gravitationsrichtung ausgerichtet sind,
▪ der Rotationslaser wird auf dem Stativ in einer Höhenrichtung entlang der Achse zumindest solange verstellt, bis der Empfangsstrahl auf das mindestens eine Detektionsfeld des Laserempfängers auftrifft,
▪ in der Längsrichtung des mindestens einen Detektionsfeldes wird von der Auswerteeinheit eine Verstellrichtung des Empfangsstrahls relativ zum Laserempfänger ermittelt und
▪ die Verstellrichtung des Empfangsstrahls wird von der Auswerteeinheit mit der Höhenrichtung des Stativs verglichen.

Das erfindungsgemäße Verfahren zum Vergleichen eines Empfangsstrahls mit einem rotierenden Laserstrahl eignet sich für Rotationslaser, die in Horizontallage auf einem verstellbaren Stativ angeordnet sind, und Laserempfänger, die in Längsanordnung ausgerichtet sind. Dabei werden die Horizontallage des Rotationslasers und die Längsanordnung des Laserempfängers über eine Ausrichtung der Komponenten zur Gravitationsrichtung des Gravitationsfeldes definiert, wobei die Gravitationsrichtung zum Gravizentrum der Erde gerichtet ist. Für die Ausrichtung der Komponenten gilt: Die Rotationsachse des Rotationslasers, die Höhenrichtung des Stativs und die Längsrichtung des Detektionsfeldes sind parallel zur Gravitationsrichtung ausgerichtet und die Querrichtung des Detektionsfeldes ist senkrecht zur Gravitationsrichtung ausgerichtet, wobei der rotierende Laserstrahl eine horizontale Laserebene, die senkrecht zur Gravitationsrichtung angeordnet ist, erzeugt. Im Rahmen des erfindungsgemäßen Verfahrens ermittelt die Auswerteeinheit eine Verstellrichtung des Empfangsstrahls relativ zum Laserempfänger und vergleicht die Verstellrichtung des Empfangsstrahls mit der Höhenrichtung des Stativs. Eine Neigung des Laserempfängers aus der Längsanordnung ist für die Durchführung des erfindungsgemäßen Verfahrens unkritisch. Auch mit einem geneigten Laserempfänger lässt sich die Verstellrichtung des Empfangsstrahls relativ zum Laserempfänger von der Auswerteeinheit des Laserempfängers bestimmen und mit der Höhenrichtung des Stativs vergleichen.

Die Auswerteeinheit bewertet den Empfangsstrahl anhand der Verstellrichtung und unterscheidet zwischen einem rotierenden Laserstrahl, einem reflektierten rotierenden Laserstrahl und einem nicht-rotierenden Fremdstrahl. Mit Hilfe des erfindungsgemäßen Verfahrens kann eine Reflektion des rotierenden Laserstrahls an einer Reflexionsfläche erkannt werden; außerdem können Fremdstrahlen, die nicht um eine Rotationsachse rotieren, vom rotierenden Laserstrahl unterschieden werden. Bei einem nicht-rotierenden Fremdstrahl kann die Auswerteeinheit keine Verstellrichtung des Empfangsstrahls relativ zum Laserempfänger ermitteln. Durch den Vergleich der Verstellrichtung des Empfangsstrahls und der Höhenrichtung des Stativs kann eine Reflektion des rotierenden Laserstrahls an einer Reflektionsfläche von der Auswerteeinheit erkannt werden. Das Stativ bewegt den Rotationslaser in einer bekannten Höhenrichtung entlang der Achse. Wenn der rotierende Laserstrahl nach einer Reflektion an einer Reflektionsfläche als Empfangsstrahl auf den Laserempfänger auftrifft, ist die Verstellrichtung des Empfangsstrahls entgegengerichtet zur bekannten Höhenrichtung des Stativs. Das erfindungsgemäße Verfahren hat den Vorteil, dass bekannte Rotationslaser, Stative und Laserempfänger zur Durchführung des Verfahrens geeignet sind und keine speziellen Komponenten erforderlich sind.

Bevorzugt werden eine erste Auftreffposition des Empfangsstrahls auf dem mindestens einen Detektionsfeld von der Auswerteeinheit zu einem ersten Zeitpunkt als erste Höhenposition und eine zweite Auftreffposition zu einem späteren zweiten Zeitpunkt als zweite Höhenposition gespeichert und die Verstellrichtung des Empfangsstrahls wird von der Auswerteeinheit aus der ersten und zweiten Höhenposition bestimmt. Der Rotationslaser wird von dem Stativ in einer bekannten Höhenrichtung (positive Höhenrichtung oder negative Höhenrichtung) entlang der Achse verstellt, bis das Detektionsfeld des Laserempfängers einen Empfangsstrahl detektiert. Anschließend wird die Höheneinstellung des Rotationslasers entlang der Achse fortgesetzt. Während der Höheneinstellung des Rotationslasers werden die erste und zweite Auftreffposition des Empfangsstrahls auf dem Detektionsfeld von der Auswerteeinheit ermittelt. Der Laserempfänger ist in Längsrichtung mit einer Messfunktion ausgestattet, die die Position der vertikalen Laserebene relativ zur Nullposition des Detektionsfeldes misst. Die erste Auftreffposition weist einen Abstand zur Nullposition des Detektionsfeldes auf, der als erste Höhenposition H₁ bezeichnet wird, und die zweite Auftreffposition weist einen Abstand zur Nullposition des Detektionsfeldes auf, der als zweite Höhenposition H₂ bezeichnet wird. Die Verstellrichtung des Empfangsstrahls verläuft parallel zur Längsrichtung des Detektionsfeldes und die Differenz zwischen der ersten und zweiten Höhenposition (Δ = H₂ - H₁) bestimmt die Richtung (positive oder negative Richtung) der Verstellrichtung des Empfangsstrahls.

Die weiteren Verfahrensschritte des erfindungsgemäßen Verfahrens sind davon abhängig, ob die Auswerteeinheit aus der ersten und zweiten Höhenposition eine Verstellrichtung des Empfangsstrahls relativ zum Laserempfänger ermitteln kann. Abhängig von der Verstellrichtung des Empfangsstrahls können mit Hilfe des erfindungsgemäßen Verfahrens nichtrotierende Fremdstrahlen und reflektierte Laserstrahlen vom rotierenden Laserstrahl unterschieden werden.

Der Empfangsstrahl wird von der Auswerteeinheit des Laserempfängers als Fremdstrahl eingestuft, wenn die erste und zweite Höhenposition des Empfangsstrahls im Wesentlichen übereinstimmen. Als Fremdstrahl wird jeder Strahl bezeichnet, der von dem rotierenden Laserstrahl des Rotationslasers verschieden ist. Bei einem nicht-rotierenden Fremdstrahl stimmen die erste und zweite Höhenposition, die vom Empfangsstrahl auf dem Detektionsfeld erzeugt werden, im Wesentlichen überein und die Auswerteeinheit des Laserempfängers kann aus der ersten und zweiten Höhenposition keine Verstellrichtung des Empfangsstrahls relativ zum Laserempfänger ermitteln.

Wenn die erste und zweite Höhenposition des Empfangsstrahls verschieden sind, wird die Verstellrichtung des Empfangsstrahls von der Auswerteeinheit des Laserempfängers bestimmt. Dabei wird die Verstellrichtung des Empfangsstrahls als positive Richtung definiert, wenn die Differenz zwischen der ersten und zweiten Höhenposition (Δ = H₂ - H₁) grösser als Null ist, und die Verstellrichtung des Empfangsstrahls wird als negative Richtung definiert, wenn die Differenz zwischen der ersten und zweiten Höhenposition (Δ = H₂ - H₁) kleiner als Null ist.

Die weiteren Verfahrensschritte des erfindungsgemäßen Verfahrens sind davon abhängig, ob die Verstellrichtung des Empfangsstrahls und die Höhenrichtung des Stativs gleichgerichtet oder entgegengerichtet sind. Das erfindungsgemäße Verfahren unterscheidet zwei Varianten: In einer ersten Variante sind die Verstellrichtung des Empfangsstrahls und die Rotationsrichtung des rotierenden Laserstrahls gleichgerichtet und in einer zweiten Variante sind die Verstellrichtung des Empfangsstrahls und die Rotationsrichtung des rotierenden Laserstrahls entgegengerichtet.

Wenn die Verstellrichtung des Empfangsstrahls und die Höhenrichtung des Stativs gleichgerichtet sind, wird der Empfangsstrahl von der Auswerteeinheit des Laserempfängers als rotierender Laserstrahl eingestuft. Der Rotationslaser bewegt den rotierenden Laserstrahl in einer bekannten Rotationsrichtung um die Rotationsachse und das Stativ bewegt den Rotationslaser in einer bekannten Höhenrichtung entlang der Achse des Stativs. Wenn der rotierende Laserstrahl ohne Reflektion an einer Reflektionsfläche als Empfangsstrahl auf den Laserempfänger auftrifft, ist die Verstellrichtung des Empfangsstrahls gleichgerichtet zur bekannten Höhenrichtung des Stativs. Beim erfindungsgemäßen Verfahren wird der Empfangsstrahl von der Auswerteeinheit des Laserempfängers immer als rotierender Laserstrahl eingestuft, wenn die Verstellrichtung des Empfangsstrahls und die Höhenrichtung gleichgerichtet sind.

Die Verstellrichtung des Empfangsstrahls ist bei einer geraden Anzahl an Reflektionen des rotierenden Laserstrahls ebenfalls gleichgerichtet zur bekannten Höhenrichtung des Stativs, so dass Empfangsstrahlen, die durch eine gerade Anzahl an Reflektionen des rotierenden Laserstrahls entstehen, von der Auswerteeinheit fälschlicherweise als rotierender Laserstrahl eingestuft werden. In der praktischen Anwendung von Rotationslasern und Laserempfängern stellt die einfache Reflektion des rotierenden Laserstrahls an einer Reflektionsfläche die häufigste Ursache von Fehlmessungen dar, so dass das erfindungsgemäße Verfahren das Risiko von Fehlmessungen reduziert, aber Fehlmessungen nicht vollkommen verhindern kann.

Besonders bevorzugt wird der Laserempfänger von der Auswerteeinheit in einen Messmodus geschaltet, wobei im Messmodus eine Höhenposition des Empfangsstrahls auf dem Detektionsfeld des Laserempfängers bestimmt wird. Wenn ein auftreffender Empfangsstrahl von der Auswerteeinheit des Laserempfängers als rotierender Laserstrahl eingestuft wurde, kann der Laserempfänger wie vorgesehen eingesetzt werden. Dazu kann der Laserempfänger von der Auswerteeinheit in einen Messmodus geschaltet werden.

Wenn die Verstellrichtung des Empfangsstrahls und die Höhenrichtung des Stativs entgegengerichtet sind, wird der Empfangsstrahl von der Auswerteeinheit des Laserempfängers als reflektierter Laserstrahl eingestuft. Der Rotationslaser bewegt den rotierenden Laserstrahl in einer bekannten Rotationsrichtung um die Rotationsachse und das Stativ bewegt den Rotationslaser in einer bekannten Höhenrichtung entlang der Achse des Stativs. Wenn der rotierende Laserstrahl nach einer Reflektion an einer Reflektionsfläche als Empfangsstrahl auf den Laserempfänger auftrifft, ist die Verstellrichtung des Empfangsstrahls entgegengerichtet zur bekannten Höhenrichtung des Stativs. Beim erfindungsgemäßen Verfahren wird der Empfangsstrahl von der Auswerteeinheit des Laserempfängers immer als reflektierter Laserstrahl eingestuft, wenn die Verstellrichtung des Empfangsstrahls und die Höhenrichtung des Stativs entgegengerichtet sind.

Die Verstellrichtung des Empfangsstrahls ist bei einer ungeraden Anzahl an Reflektionen des rotierenden Laserstrahls ebenfalls entgegengerichtet zur bekannten Höhenrichtung des Stativs, so dass Empfangsstrahlen, die durch eine ungerade Anzahl an Reflektionen des rotierenden Laserstrahls entstehen, von der Auswerteeinheit richtigerweise als reflektierter Laserstrahl eingestuft werden.

Beim erfindungsgemäßen Verfahren wird die horizontale Laserebene, die der rotierende Laserstrahl erzeugt, mit Hilfe des Stativs verstellt. Die Auswerteeinheit des Laserempfängers ermittelt eine Verstellrichtung der horizontalen Laserebene und vergleicht die Verstellrichtung mit der Höhenrichtung des Stativs. Dabei gilt es zu beachten, dass die Verstellrichtung von der Position des Laserempfängers abhängig ist und die Verstellrichtung in einander gegenüberliegenden Positionen des Laserempfängers einander entgegen gerichtet ist. Die Position des Laserempfängers zum Rotationslaser kann mit Hilfe des rotierenden Laserstrahls bestimmt werden.

In einer ersten bevorzugten Weiterentwicklung des Verfahrens erzeugt der rotierende Laserstrahl eine auf einen Winkel (p kleiner als 360° begrenzte horizontale Laserebene. Dabei kann die begrenzte horizontale Laserebene in einem Rotationsmodus oder einem Scanmodus des Rotationslasers erzeugt werden. Im Rotationsmodus wird der Laserstrahl in einer gleichbleibenden Rotationsrichtung wiederholt um 360° um die Rotationsachse bewegt und im Scanmodus wird der Laserstrahl in abwechselnder Rotationsrichtung in einem begrenzten Winkel um die Rotationsachse hin und her bewegt.

In einer ersten Variante des Verfahrens wird der rotierende Laserstrahl in einer Rotationsrichtung über 360° um die Rotationsachse bewegt, wobei der Laserstrahl innerhalb des Winkels (p eingeschaltet und außerhalb des Winkels (p abgeschaltet wird. Die erste Variante eignet sich für Rotationslaser, die einen Rotationsmodus aufweisen.

In einer zweiten alternativen Variante des Verfahrens wird der rotierende Laserstrahl innerhalb des Winkels (p in wechselnder Rotationsrichtung um die Rotationsachse hin und her bewegt. Die zweite Variante eignet sich für Rotationslaser, die einen Scanmodus aufweisen.

In einer zweiten bevorzugten Weiterentwicklung des Verfahrens wird der rotierende Laserstrahl in einer Rotationsrichtung über 360° um die Rotationsachse bewegt und der Winkel von 360° wird in einen ersten und zweiten Winkelbereich unterteilt, wobei sich der rotierende Laserstrahl im ersten und zweiten Winkelbereich in einer Strahleigenschaft oder in mehreren Strahleigenschaften unterscheidet. Im Rahmen des erfindungsgemäßen Verfahrens analysiert die Auswerteeinheit des Laserempfängers den auftreffenden Empfangsstrahl. Anhand der Strahleigenschaft, in der sich der rotierende Laserstrahl im ersten und zweiten Winkelbereich unterscheidet, kann die Auswerteeinheit den Winkelbereich bestimmen, in dem das Detektionsfeld des Laserempfängers vom Empfangsstrahl getroffen wurde.

Bevorzugt wird der rotierende Laserstrahl mit einem Modulationssignal moduliert, wobei im ersten Winkelbereich ein erstes Modulationssignal und im zweiten Winkelbereich ein zweites Modulationssignal, das vom ersten Modulationssignal verschieden ist, verwendet wird. Das erste und zweite Modulationssignal können sich in einer Amplitude, einer Form und/oder eine Modulationsfrequenz voneinander unterscheiden. Im Rahmen des erfindungsgemäßen Verfahrens analysiert die Auswerteeinheit des Laserempfängers den auftreffenden Empfangsstrahl und kann das Modulationssignal, mit dem der Empfangsstrahl moduliert wurde, bestimmen. Anhand des Modulationssignals kann die Auswerteeinheit den Winkelbereich bestimmen, in dem das Detektionsfeld des Laserempfängers vom Empfangsstrahl getroffen wurde.

Erfindungsgemäß ist zur Durchführung eines Verfahrens zum Vergleichen eines auf einen Laserempfänger auftreffenden Empfangsstrahls mit einem rotierenden Laserstrahl eine Vorrichtung mit einem Rotationslaser, der einen in einer Rotationsrichtung um eine Rotationsachse rotierenden Laserstrahl aussendet und auf einem Stativ angeordnet ist, und einem Laserempfänger, der eine Auswerteeinheit und mindestens ein Detektionsfeld aufweist, vorgesehen. Der Rotationslaser ist in Horizontallage auf dem verstellbaren Stativ angeordnet und der Laserempfänger ist in Längsanordnung ausgerichtet. Für die Komponenten gilt: Die Rotationsachse des Rotationslasers, die Höhenrichtung des Stativs und die Längsrichtung des Detektionsfeldes sind parallel zur Gravitationsrichtung ausgerichtet und die Querrichtung des Detektionsfeldes ist senkrecht zur Gravitationsrichtung ausgerichtet, wobei der rotierende Laserstrahl eine horizontale Laserebene, die senkrecht zur Gravitationsrichtung angeordnet ist, erzeugt.

Besonders bevorzugt weist der Laserempfänger einen Neigungssensor auf, der eine Neigung des Laserempfängers relativ zur Gravitationsrichtung des Gravitationsfeldes misst. Der Neigungssensor kann dazu genutzt werden, die Ausrichtung des Laserempfängers eindeutig zu definieren. Bei der Ausführung des erfindungsgemäßen Verfahrens ist der Laserempfänger in Längsanordnung ausgerichtet, wobei die Längsrichtung des Detektionsfeldes in Längsanordnung parallel und die Querrichtung des Detektionsfeldes in Längsanordnung senkrecht zur Gravitationsrichtung verlaufen sollten. Die Längsrichtung des Detektionsfeldes und die Gravitationsrichtung können gleichgerichtet oder entgegengerichtet sein. Mit Hilfe des Neigungssensors können die beiden Ausrichtungen "gleichgerichtet" und "entgegengerichtet" voneinander unterschieden werden.

Besonders bevorzugt sind das Stativ und der Laserempfänger über eine Kommunikationsverbindung kommunizierend verbindbar, wobei die Kommunikation zwischen der Auswerteeinheit des Laserempfängers und einer Kontrolleinheit des Stativs erfolgt. Bei der Ausführung des erfindungsgemäßen Verfahrens ermittelt die Auswerteeinheit des Laserempfängers aus der ersten und zweiten Höhenposition eine Verstellrichtung des Empfangsstrahls relativ zum Laserempfänger und vergleicht die Verstellrichtung des Empfangsstrahls mit der Höhenrichtung des Stativs. Die Höhenrichtung des Stativs kann vom Stativ über die Kommunikationsverbindung an die Auswerteeinheit des Laserempfängers übermittelt werden, so dass das erfindungsgemäße Verfahren automatisch durchgeführt werden kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser und einem Laserempfänger;
- FIG. 2: den Rotationslaser und Laserempfänger der FIG. 1 in einer dreidimensionalen Darstellung, wobei der Rotationslaser in Horizontallage und der Laserempfänger in Längsanordnung ausgerichtet sind;
- FIG. 3: den Aufbau des Laserempfängers und das Zusammenwirken mit dem Rotationslaser in Form eines Blockdiagramms;
- FIG. 4: die Vorrichtung der FIG. 1 bei der Durchführung eines erfindungsgemäßen Verfahrens zum Vergleichen eines auf den Laserempfänger auftreffenden Empfangsstrahls mit einem rotierenden Laserstrahl des Rotationslasers;
- FIG. 5: eine erste und zweite Auftreffposition, die der rotierende Laserstrahl des Rotationslasers auf einem Detektionsfeld des Laserempfängers erzeugt;
- FIG. 6: eine erste und zweite Auftreffposition, die der rotierende Laserstrahl des Rotationslasers nach einer Reflektion an einer Reflexionsfläche auf dem Detektionsfeld des Laserempfängers erzeugt; und
- FIG. 7: eine erste und zweite Auftreffposition, die ein als nicht-rotierender Fremdstrahl ausgebildeter Empfangsstrahl auf dem Detektionsfeld des Laserempfängers erzeugt.

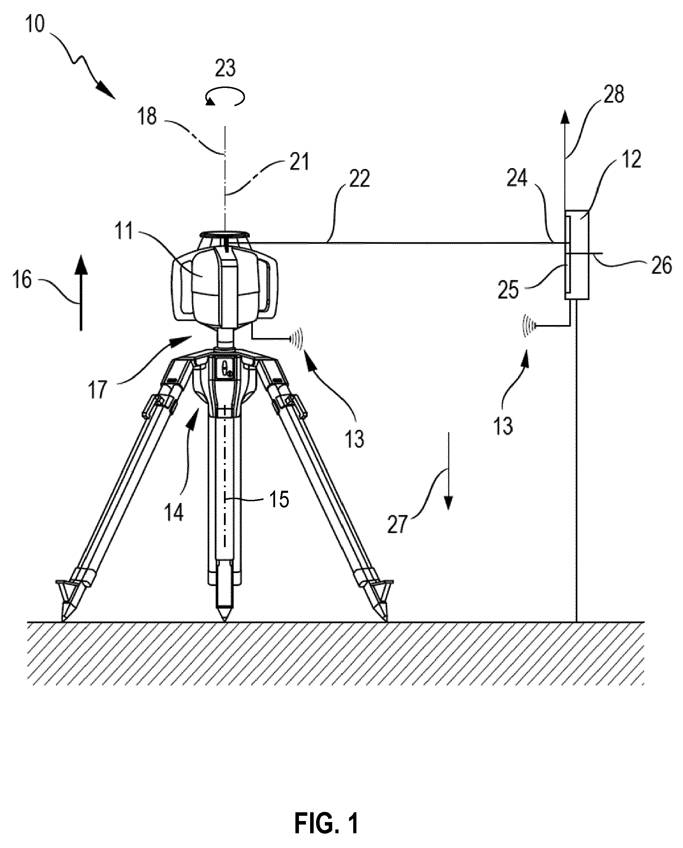

**FIG. 1** zeigt eine Vorrichtung **10** mit einem Rotationslaser **11** und einem Laserempfänger **12,** die über eine Kommunikationsverbindung **13** verbindbar sind. Die Kommunikationsverbindung 13 ist als drahtlose Kommunikationsverbindung oder als drahtgebundene Kommunikationsverbindung ausgebildet. Der Rotationslaser 11 ist in einer Horizontallage angeordnet, die für horizontale Anwendungen des Rotationslasers 11 vorgesehen ist, und der Laserempfänger 12 ist in der Längsanordnung angeordnet. Die Vorrichtung 10 ist zur Durchführung eines erfindungsgemäßen Verfahrens zum Vergleichen eines auf den Laserempfänger 12 auftreffenden Empfangsstrahls mit einem rotierenden Laserstrahl des Rotationslasers 11 vorgesehen.

Der Rotationslaser 11 ist auf einem motorisierten Stativ **14** angeordnet, das eine automatische Höheneinstellung des Rotationslasers 11 entlang einer Achse **15** in einer Höhenrichtung **16** ermöglicht. Zusätzlich kann eine Drehplattform **17** vorgesehen sein, die eine automatische Winkeleinstellung des Rotationslasers 11 um eine Drehachse **18** der Drehplattform 17 ermöglicht. Die Drehplattform 17 kann in das Stativ 14 oder den Rotationslaser 11 integriert sein oder als separate Komponente, die auf dem Stativ 14 angeordnet wird, ausgebildet sein. Der Rotationslaser 11 ist als horizontal und vertikal einsetzbarer Rotationslaser ausgebildet, der einen um eine Rotationsachse **21** des Rotationslasers 11 rotierenden Laserstrahl **22** aussendet. Der rotierende Laserstrahl 22 rotiert in einer Rotationsrichtung **23** um die Rotationsachse 21 und erzeugt eine Laserebene, die senkrecht zur Rotationsachse 21 des Rotationslasers 11 angeordnet ist.

Der Laserempfänger 12 ist mit einer Höhenmessfunktion ausgestattet, die eine Auftreffposition eines Empfangsstrahls **24** auf einem Detektionsfeld **25** des Laserempfängers 12 ermittelt und den Abstand des Empfangsstrahls 24 zu einer Nullposition **26** des Detektionsfeldes 25 als Höhenposition darstellt. Die Ausrichtung des Laserempfängers 12 ist mittels des Detektionsfeldes 25 und einer Gravitationsrichtung **27** des Gravitationsfeldes definiert. Das Detektionsfeld 25 des Laserempfängers 12 weist in einer Längsrichtung **28** eine Detektionshöhe und in einer Querrichtung **29** eine Detektionsbreite auf. Die Längsrichtung 28 entspricht der Messrichtung des Laserempfängers 12 und die Querrichtung 29 ist senkrecht zur Längsrichtung 25 ausgerichtet. Als Längsanordnung wird die Ausrichtung des Laserempfängers 12 bezeichnet, in der die Längsrichtung 28 des Detektionsfeldes 25 parallel und die Querrichtung 29 des Detektionsfeldes 25 senkrecht zur Gravitationsrichtung 27 ausgerichtet sind, und als Queranordnung wird die Ausrichtung des Laserempfängers 12 bezeichnet, in der die Längsrichtung 28 des Detektionsfeldes 25 senkrecht und die Querrichtung 29 des Detektionsfeldes 25 parallel zur Gravitationsrichtung 27 ausgerichtet sind.

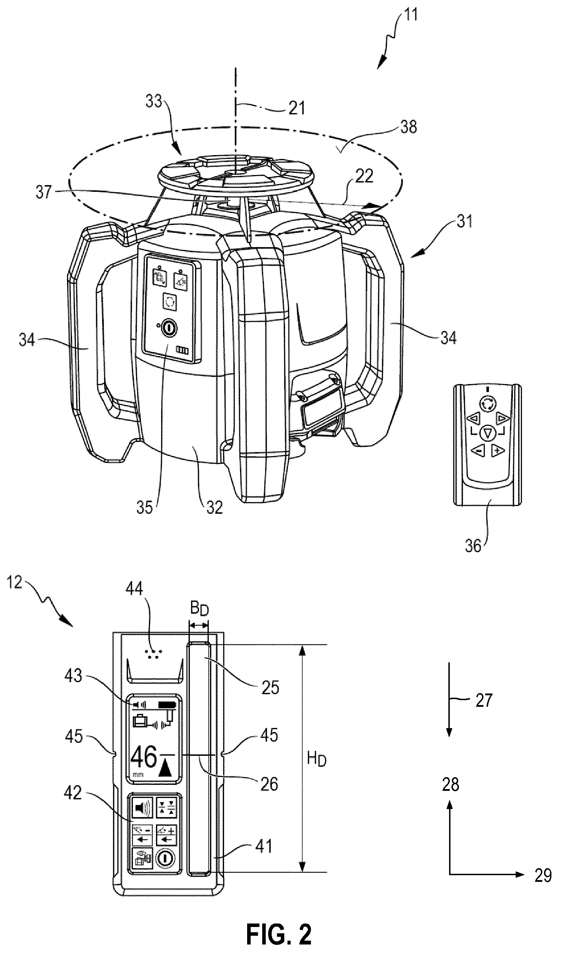

**FIG. 2** zeigt den Rotationslaser 11 und den Laserempfänger 12 der FIG. 1 in einer dreidimensionalen Darstellung, wobei der Rotationslaser 11 und der Laserempfänger 12 zur Durchführung des erfindungsgemäßen Verfahrens in Horizontallage bzw. in Längsanordnung ausgerichtet sind.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 18 rotierende Umlenkoptik **37** trifft. Der Laserstrahl wird von der Umlenkoptik 37 um 90° umgelenkt und bildet den rotierenden Laserstrahl 22 des Rotationslasers 11, der eine Laserebene aufspannt. Der rotierende Laserstrahl 22 erzeugt in Horizontallage des Rotationslasers 11 eine horizontale Laserebene **38.**

Der Laserempfänger 12 umfasst ein Empfängergehäuse **41,** eine Bedienungseinrichtung **42,** ein optisches Display **43,** einen Lautsprecher **44** und das Detektionsfeld 25. Das Detektionsfeld 25 weist in der Längsrichtung 28 eine Detektionshöhe **H_{D}** und in der Querrichtung 29 eine Detektionsbreite **B_{D}** auf. Die Bedienungseinrichtung 42, das optische Display 43, der Lautsprecher 44 und das Detektionsfeld 25 sind in das Empfängergehäuse 41 des Laserempfängers 12 integriert. Über das optische Display 43 kann der Bediener Informationen über den Laserempfänger 12 ablesen. Dazu gehören beispielsweise ein Ladezustand des Laserempfängers 12, Informationen über die Kommunikationsverbindung 13 zu einem Rotationslaser 11 und die eingestellte Lautstärke des Lautsprechers 44. Außerdem kann der Abstand des Empfangsstrahls 24 zur Nullposition 26 des Laserempfängers 12 als numerischer Wert optisch angezeigt werden. Alternativ oder zusätzlich zur optischen Anzeige auf dem optischen Display 43 kann der Abstand des Empfangsstrahls 24 über den Lautsprecher 44 mitgeteilt werden. Die Nullposition 26 des Detektionsfeldes 25 wird am Empfängergehäuse 41 über Markierungskerben **45** angezeigt.

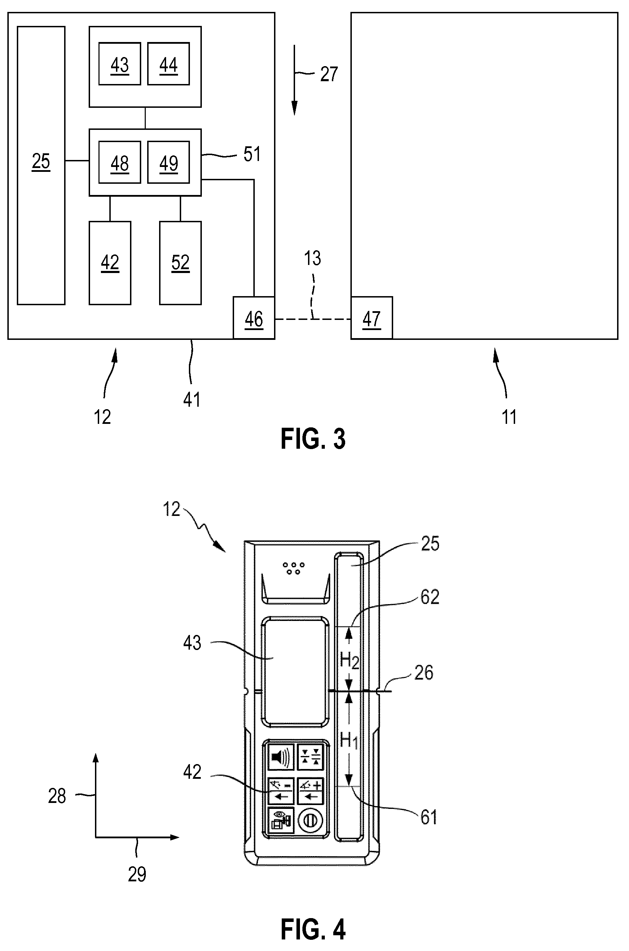

**FIG.** 3 zeigt den Aufbau des Laserempfängers 12 im Detail und das Zusammenwirken des Laserempfängers 12 mit dem Rotationslaser 11 in Form eines Blockdiagramms. Die Kommunikation zwischen dem Laserempfänger 12 und dem Rotationslaser 11 kann über die Kommunikationsverbindung 13 erfolgen, die eine erste Sende- und Empfangseinheit **46** im Laserempfänger 12 mit einer zweiten Sende- und Empfangseinheit **47** im Rotationslaser 11 verbindet. Die erste und zweite Sende- und Empfangseinheit 46, 47 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 25, das optische Display 43 und der Lautsprecher 44 sind mit einer Auswerteeinheit **48** verbunden, die im Inneren des Empfängergehäuses 41 angeordnet ist. Die Auswerteeinheit 48 ist mit einer Steuereinheit **49** zur Steuerung des Laserempfängers 12 verbunden, wobei die Auswerteeinheit 48 und die Steuereinheit 49 in eine beispielsweise als Mikrocontroller ausgebildete Kontrolleinheit **51** integriert sind. Der Laserempfänger 12 kann zusätzlich einen Neigungssensor **52** umfassen, der im Inneren des Empfängergehäuses 41 angeordnet und der mit der Kontrolleinheit 41 verbunden ist. Mit Hilfe des Neigungssensors 52 kann eine Neigung des Laserempfängers 12 relativ zur Gravitationsrichtung 27 des Gravitationsfeldes gemessen werden. Der Neigungssensor 52 kann beispielsweise einen 2-Achsen-Beschleunigungssensor oder zwei 1-Achs-Beschleunigungssensoren umfassen.

**FIG. 4** zeigt die Vorrichtung 10 bei der Durchführung des erfindungsgemäßen Verfahrens zum Vergleichen des Empfangsstrahls 24 mit dem rotierenden Laserstrahl 22. Der Rotationslaser 11 ist in Horizontallage auf dem Stativ 14 angeordnet und der Laserempfänger 12 ist in Längsanordnung ausgerichtet. Für die Ausrichtung der Komponenten 11, 12, 14 der Vorrichtung 10 zur Gravitationsrichtung 27 gilt: Die Rotationsachse 21 des Rotationslasers 11, die Höhenrichtung 16 des Stativs 14 und die Längsrichtung 28 des Detektionsfeldes 25 sind parallel zur Gravitationsrichtung 27 ausgerichtet und die Querrichtung 29 des Detektionsfeldes 25 ist senkrecht zur Gravitationsrichtung 27 ausgerichtet. Der rotierende Laserstrahl 22 erzeugt die horizontale Laserebene 38, die senkrecht zur Gravitationsrichtung 27 angeordnet ist.

Der Rotationslaser 11 wird von dem Stativ 14 in einer bekannten Höhenrichtung (Höhenrichtung 16 oder entgegengerichtet zur Höhenrichtung 16) entlang der Achse 15 verstellt, bis das Detektionsfeld 25 des Laserempfängers 12 einen Empfangsstrahl detektiert. Anschließend wird die Höheneinstellung des Rotationslasers 11 entlang der Achse 15 fortgesetzt. Während der Höheneinstellung des Rotationslasers 11 werden die Auftreffpositionen des Empfangsstrahls 24 auf dem Detektionsfeld 25 von der Auswerteeinheit 48 zu verschiedenen Zeitpunkten ermittelt.

Zu einem ersten Zeitpunkt **t₁** bestimmt die Auswerteeinheit 48 die Auftreffposition des Empfangsstrahls 24 auf dem Detektionsfeld 25 als erste Auftreffposition **61** und speichert den Abstand der ersten Auftreffposition 61 zur Nullposition 26 des Detektionsfeldes 25 als erste Höhenposition **H₁**. Zu einem späteren zweiten Zeitpunkt **t₂** bestimmt die Auswerteeinheit 48 die Auftreffposition des Empfangsstrahls 24 auf dem Detektionsfeld 25 als zweite Auftreffposition **62** und speichert den Abstand der zweiten Auftreffposition 62 zur Nullposition 26 des Detektionsfeldes 25 als zweite Höhenposition **H₂**. Die Auswerteeinheit 48 bestimmt aus der ersten und zweiten Höhenposition H₁, H₂ eine Verstellrichtung **63** des Empfangsstrahls 24 relativ zum Laserempfänger 12.

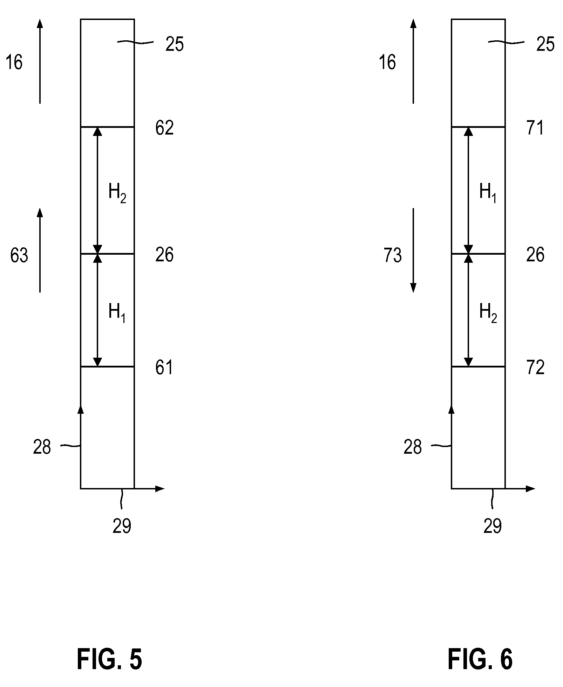

**FIG. 5** zeigt die erste und zweite Auftreffposition 61, 62, die der rotierende Laserstrahl 22 des Rotationslasers 21 auf dem Detektionsfeld 25 des Laserempfängers 12 erzeugt. Der Laserempfänger 12 ist in Längsanordnung ausgerichtet und die Längsrichtung 28 des Detektionsfeldes 25 verläuft parallel zur Gravitationsrichtung 27. Die erste Auftreffposition 61 weist einen ersten Abstand H₁ zur Nullposition 26 des Detektionsfeldes 25 auf und die zweite Auftreffposition 62 weist einen zweiten Abstand H₂ zur Nullposition 26 des Detektionsfeldes 25 auf. Die Verstellrichtung 63 des Empfangsstrahls 24 verläuft parallel zur Längsrichtung 28 des Detektionsfeldes 25.

Die Auswerteeinheit 48 des Laserempfängers 12 ermittelt aus der ersten und zweiten Höhenposition H₁, H₂ die Verstellrichtung 63 des Empfangsstrahls 24 relativ zum Laserempfänger 12 und vergleicht die Verstellrichtung 63 des Empfangsstrahls 24 mit der Höhenrichtung 16 des Stativs 14. Die Verstellrichtung 63 des Empfangsstrahls 24 und die Höhenrichtung 16 des Stativs 14 sind gleichgerichtet und der Empfangsstrahl 24 wird von der Auswerteeinheit 48 des Laserempfängers 12 als rotierender Laserstrahl 22 eingestuft.

**FIG. 6** zeigt eine erste und zweite Auftreffposition **71, 72,** die der rotierende Laserstrahl 22 nach einer einfachen Reflektion an einer Reflexionsfläche auf dem Detektionsfeld 25 des Laserempfängers 12 erzeugt. Die erste Auftreffposition 71 weist einen ersten Abstand zur Nullposition 26 des Detektionsfeldes 25 auf und die zweite Auftreffposition 72 weist einen zweiten Abstand zur Nullposition 26 des Detektionsfeldes 25 auf, wobei der erste Abstand als erste Höhenposition **H₁** und der zweite Abstand als zweite Höhenposition **H₂** bezeichnet wird.

Die Auswerteeinheit 48 des Laserempfängers 12 ermittelt aus der ersten und zweiten Höhenposition H₁, H₂ eine Verstellrichtung **73** des Empfangsstrahls 24 relativ zum Laserempfänger 12 und vergleicht die Verstellrichtung 73 des Empfangsstrahls 24 mit der positiven Höhenrichtung 16A des Stativs 14. Die Verstellrichtung 73 des Empfangsstrahls 24 und die positiven Höhenrichtung 16A des Stativs 14 sind entgegengerichtet und der Empfangsstrahl 24 wird von der Auswerteeinheit 48 des Laserempfängers 12 als reflektierter Laserstrahl eingestuft.

Durch eine einfache Reflektion des rotierenden Laserstrahls 22 an einer Reflektionsfläche wird die Verstellrichtung des Empfangsstrahls auf dem Detektionsfeld 25 umgekehrt. Diese Umkehrung der Verstellrichtung wird dazu genutzt, einen rotierenden Laserstrahl, der an einer Reflektionsfläche reflektiert wurde, von einem rotierenden Laserstrahl zu unterscheiden.

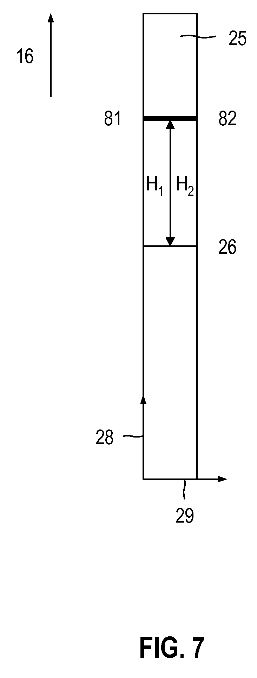

**FIG. 7** zeigt eine erste und zweite Auftreffposition **81, 82,** die ein als nicht-rotierender Fremdstrahl ausgebildeter Empfangsstrahl 24 auf dem Detektionsfeld 25 des Laserempfängers 12 erzeugt. Die erste Auftreffposition 81 weist einen ersten Abstand zur Nullposition 26 des Detektionsfeldes 25 auf und die zweite Auftreffposition 82 weist einen zweiten Abstand zur Nullposition 26 des Detektionsfeldes 25 auf, wobei der erste Abstand als erste Höhenposition **H₁** und der zweite Abstand als zweite Höhenposition **H₂** bezeichnet wird.

Die Auswerteeinheit 48 des Laserempfängers 12 bestimmt die Differenz zwischen der ersten und zweiten Höhenposition H₁, H₂. Die erste Auftreffposition 81 stimmt im Wesentlichen mit der zweiten Auftreffposition 82 überein und die Differenz zwischen der ersten und zweiten Höhenposition H₁, H₂ ergibt Null. Bei einer Differenz von Null kann die Auswerteeinheit 48 des Laserempfängers 12 keine Verstellrichtung des Empfangsstrahls 24 relativ zum Laserempfänger 12 ermitteln. Da der Empfangsstrahl 24 als nicht-rotierender Fremdstrahl ausgebildet ist, hat die Verstellung des Rotationslasers 11 entlang der Achse 15 keinen Einfluss auf die Auftreffposition des Empfangsstrahls 24 auf dem Detektionsfeld 25.

Bei der Ausführung des erfindungsgemäßen Verfahrens sind der Rotationslaser 11 in Horizontallage und der Laserempfänger 12 in Längsanordnung ausgerichtet. Die horizontale Laserebene 38, die der rotierende Laserstrahl 22 erzeugt, wird mit Hilfe des Stativs 14 entlang der Achse 15 verstellt. Die Auswerteeinheit 48 des Laserempfängers 12 ermittelt eine Verstellrichtung und vergleicht die Verstellrichtung mit der Höhenrichtung 16 des Stativs 14. Dabei gilt es zu beachten, dass die Verstellrichtung von der Position des Laserempfängers 12 abhängig ist und die Verstellrichtung in einander gegenüberliegenden Positionen des Laserempfängers 12 einander entgegen gerichtet ist. Die Position des Laserempfängers 12 zum Rotationslaser 11 kann mit Hilfe des rotierenden Laserstrahls 22 bestimmt werden.

Der rotierende Laserstrahl erzeugt eine auf einen Winkel ϕ kleiner als 360° begrenzte vertikale Laserebene; als Winkel ϕ eignen sich vor allem Winkel kleiner als 180°. Der Rotationslaser 11 startet seine Rotation um die Rotationsachse 21 in einem Rotationswinkel, der als Nullwinkel bezeichnet wird. Ausgehend vom Nullwinkel kann ein positiver Winkelbereich zwischen 0° und +180° und ein negativer Winkelbereich zwischen 0° und -180° definiert werden.

Alternativ wird der rotierende Laserstrahl in einer Rotationsrichtung über 360° um die Rotationsachse 21 bewegt und der Winkel von 360° wird in einen ersten und zweiten Winkelbereich unterteilt, beispielsweise kann der positive Winkelbereich zwischen 0° und +180° als erster Winkelbereich und der negative Winkelbereich zwischen 0° und -180° als zweiter Winkelbereich definiert werden. Zur Unterscheidung des ersten und zweiten Winkelbereichs weist der rotierende Laserstrahl im ersten und zweiten Winkelbereich mindestens eine unterschiedliche Strahleigenschaft auf. Anhand der Strahleigenschaft, in der sich der rotierende Laserstrahl 22 im ersten und zweiten Winkelbereich unterscheidet, kann die Auswerteeinheit 48 des Laserempfängers 12 den Winkelbereich bestimmen, in dem das Detektionsfeld 25 des Laserempfängers 12 vom Empfangsstrahl 24 getroffen wurde.

Als Strahleigenschaft, die zur Unterscheidung des ersten und zweiten Winkelbereichs genutzt werden kann, eignet sich beispielsweise ein Modulationssignal. Dabei wird im ersten Winkelbereich ein erstes Modulationssignal und im zweiten Winkelbereich ein zweites Modulationssignal, das vom ersten Modulationssignal verschieden ist, verwendet. Das erste und zweite Modulationssignal können sich in einer Amplitude, einer Form und/oder eine Modulationsfrequenz voneinander unterscheiden. Im Rahmen des erfindungsgemäßen Verfahrens analysiert die Auswerteeinheit 48 des Laserempfängers 12 den auftreffenden Empfangsstrahl 24 und kann das Modulationssignal, mit dem der Empfangsstrahl 24 moduliert wurde, bestimmen. Anhand des Modulationssignals kann die Auswerteeinheit 48 den Winkelbereich bestimmen, in dem das Detektionsfeld 25 des Laserempfängers 12 vom Empfangsstrahl 24 getroffen wurde.

## Patentansprüche

1. Verfahren zum Vergleichen eines auf einen Laserempfänger (12) auftreffenden Empfangsstrahls (24) mit einem rotierenden Laserstrahl (22), der von einem Rotationslaser (11) um eine Rotationsachse (21) bewegt wird, wobei der Laserempfänger (12) eine Auswerteeinheit (48) und mindestens ein Detektionsfeld (25) mit einer Längsrichtung (28) und einer Querrichtung (29) umfasst, **gekennzeichnet durch** die Verfahrensschritte:
▪ der Rotationslaser (11) wird auf einem entlang einer Achse (15) verstellbaren Stativ (14) angeordnet, wobei die Rotationsachse (21) des Rotationslasers (11) und die Achse (15) des Stativs (14) parallel zu einer Gravitationsrichtung (27) des Gravitationsfeldes ausgerichtet werden,
▪ der Laserempfänger (12) wird in einer Längsanordnung ausgerichtet, wobei in der Längsanordnung die Längsrichtung (28) des mindestens einen Detektionsfeldes (25) parallel und die Querrichtung (29) des mindestens einen Detektionsfeldes (25) senkrecht zur Gravitationsrichtung (27) ausgerichtet sind,
▪ der Rotationslaser (11) wird auf dem Stativ (14) in einer Höhenrichtung (16) entlang der Achse (15) zumindest solange verstellt, bis der Empfangsstrahl (24) auf das mindestens eine Detektionsfeld (25) des Laserempfängers (12) auftrifft,
▪ in der Längsrichtung (28) des mindestens einen Detektionsfeldes (25) wird von der Auswerteeinheit (48) eine Verstellrichtung (63; 73) des Empfangsstrahls (24) relativ zum Laserempfänger (12) ermittelt und
▪ die Verstellrichtung (63; 73) des Empfangsstrahls (24) wird von der Auswerteeinheit (48) mit der Höhenrichtung (16) des Stativs (14) verglichen.

2. Verfahren nach Anspruch 1, **dadurch gekennzeichnet, dass** eine erste Auftreffposition (61; 71; 81) des Empfangsstrahls (24) auf dem mindestens einen Detektionsfeld (25) von der Auswerteeinheit (48) zu einem ersten Zeitpunkt (t₁) als erste Höhenposition (H₁) und eine zweite Auftreffposition (62; 72; 82) zu einem späteren zweiten Zeitpunkt (t₂) als zweite Höhenposition (H₂) gespeichert werden und die Verstellrichtung (63; 73) des Empfangsstrahls (24) von der Auswerteeinheit (48) aus der ersten und zweiten Höhenposition (H₁, H₂) bestimmt wird.

3. Verfahren nach Anspruch 2, **dadurch gekennzeichnet, dass** der Empfangsstrahl (24) von der Auswerteeinheit (48) als Fremdstrahl eingestuft wird, wenn die erste und zweite Höhenposition (H₁, H₂) des Empfangsstrahls (24) im Wesentlichen übereinstimmen.

4. Verfahren nach Anspruch 2, **dadurch gekennzeichnet, dass** die Verstellrichtung des Empfangsstrahls (24) von der Auswerteeinheit (48) bestimmt wird, wenn die erste und zweite Höhenposition (H₁, H₂) des Empfangsstrahls (24) verschieden sind.

5. Verfahren nach Anspruch 4, **dadurch gekennzeichnet, dass** der Empfangsstrahl (24) von der Auswerteeinheit (48) als rotierender Laserstrahl (22) eingestuft wird, wenn die Verstellrichtung (63) des Empfangsstrahls (24) und die Höhenrichtung (16) des Stativs (14) gleichgerichtet sind.

6. Verfahren nach Anspruch 5, **dadurch gekennzeichnet, dass** der Laserempfänger (12) von der Auswerteeinheit (48) in einen Messmodus geschaltet wird, wobei im Messmodus eine Position des Empfangsstrahls (24) bestimmt wird.

7. Verfahren nach Anspruch 4, **dadurch gekennzeichnet, dass** der Empfangsstrahl (24) von der Auswerteeinheit (48) als reflektierter Laserstrahl eingestuft wird, wenn die Verstellrichtung (73) des Empfangsstrahls (24) und die Höhenrichtung (16) des Stativs (14) entgegengerichtet sind.

8. Verfahren nach Anspruch 1, **dadurch gekennzeichnet, dass** der rotierende Laserstrahl (22) eine auf einen Winkel (ϕ) kleiner als 360° begrenzte horizontale Laserebene (38) erzeugt.

9. Verfahren nach Anspruch 8, **dadurch gekennzeichnet, dass** der rotierende Laserstrahl (22) in einer Rotationsrichtung (23) über 360° um die Rotationsachse (21) bewegt wird, wobei der rotierende Laserstrahl (22) innerhalb des Winkels (ϕ) eingeschaltet und außerhalb des Winkels (ϕ) abgeschaltet wird.

10. Verfahren nach Anspruch 8, **dadurch gekennzeichnet, dass** der rotierende Laserstrahl (22) innerhalb des Winkels (ϕ) in wechselnder Rotationsrichtung (23) um die Rotationsachse (21) hin und her bewegt wird.

11. Verfahren nach Anspruch 1, **dadurch gekennzeichnet, dass** der rotierende Laserstrahl (22) in einer Rotationsrichtung (23) über 360° um die Rotationsachse (21) bewegt wird und der Winkel von 360° in einen ersten und zweiten Winkelbereich unterteilt wird, wobei sich der rotierende Laserstrahl (22) im ersten und zweiten Winkelbereich in einer Strahleigenschaft oder in mehreren Strahleigenschaften unterscheidet.

12. Verfahren nach Anspruch 11, **dadurch gekennzeichnet, dass** der rotierende Laserstrahl (22) mit einem Modulationssignal moduliert wird, wobei im ersten Winkelbereich ein erstes Modulationssignal und im zweiten Winkelbereich ein zweites Modulationssignal, das vom ersten Modulationssignal verschieden ist, verwendet wird.

13. Vorrichtung (10) mit einem Rotationslaser (11), der einen in einer Rotationsrichtung (23) um eine Rotationsachse (21) rotierenden Laserstrahl (22) aussendet und auf einem entlang einer Achse (15) verstellbaren Stativ (14) angeordnet ist, und einem Laserempfänger (12), der eine Auswerteeinheit (48) und mindestens ein Detektionsfeld (25) aufweist, zur Durchführung eines Verfahrens nach einem der Ansprüche 1 bis 12.

14. Vorrichtung nach Anspruch 13, **dadurch gekennzeichnet, dass** der Laserempfänger (12) einen Neigungssensor (52) aufweist, der eine Neigung des Laserempfängers (12) relativ zur Gravitationsrichtung (27) misst.

15. Vorrichtung nach einem der Ansprüche 13 bis 14, **dadurch gekennzeichnet, dass** das Stativ (14) und der Laserempfänger (12) über eine Kommunikationsverbindung kommunizierend verbindbar sind, wobei die Kommunikation zwischen der Auswerteeinheit (48) des Laserempfängers (12) und einer Kontrolleinheit des Stativs (14) erfolgt.
